# EUROPEAN PATENT APPLICATION

(11) **EP 2 826 989 A1**
(43) Date of publication of application: **21.01.2015**
(21) Application number: 13176534.9
(22) Date of filing: 15.07.2013
(51) Int. Cl.: F03B 13/10

(54) **Fluid regulating valve**

(71) Applicant: Energreen AS, 4325 Sandnes (NO)
(72) Inventor: Sörensen, Per Hassel, NO-4307 Sandes (NO)
(74) Representative: Kransell & Wennborg KB

(57) **Abstract**

A valve for regulating the fluid pressure and/or the fluid flow rate in a fluid distribution network, said valve comprising; a fluid inlet port (10) and a fluid outlet port (14); a first stator defining an interior space; and a main pressure control means for regulating the pressure difference between the fluid inlet port and the fluid outlet port, which main pressure control means comprises a turbine (18) which is rotatably arranged in the interior space and means for controlling the rotation of the turbine. The valve further comprises an auxiliary pressure control means, which is arranged to limit the fluid pressure at the fluid outlet port to a predetermined maximum value.

## Description

### TECHNICAL FIELD

The invention relates to a valve for regulating the fluid pressure and/or the fluid flow in a fluid distribution and transportation network. In particular the invention relates to such a valve comprising a stator and a rotor arranged in the stator. The valve may be used to decrease the fluid pressure and/or flow, i.e. to produce a negative differential pressure or a flow rate reduction between the inlet port and the outlet port of the device by extracting power from the fluid. The rotor may be connected to a breaking means for causing a decrease of the fluid pressure or the fluid flow.

### BACKGROUND AND PRIOR ART

There often exists a need for regulating the fluid pressure and/or the fluid flow rate in fluid distribution networks. An example of such a fluid distribution network is a water distribution system used in cities for distributing drinking water from a central reservoir to a plurality of households and other water consumers. Such networks or systems typically comprise one or several main water lines or conduits that convey water from a reservoir or a pump station to different zones of the network. Each zone normally comprises a secondary water line or conduit which conveys water to different areas in the zone. In each such area, a consumer distribution line supplies drinking water from the secondary conduit to each individual consumer within the area. Typically the pressure in the main conduits is around 20 bar, whereas the pressure in the individual consumer lines is kept at around 3 bar. Therefore the distribution network often comprises pressure reducing means which normally are arranged at the junctions between the main and secondary conduits and/or between the secondary conduits and the consumer lines. The pressure reducing means may however also be arranged within the main, secondary or the consumer line conduits. In other systems there may be arranged additional intermediate water line conduits operating at different pressures between the main water line and the consumer distribution lines. Traditionally the pressure reducing means are constituted by conventional pressure valves, which often are spring loaded or controlled by a pilot pressure. Alternatively or in combination, tanks may be used to break or reduce the pressure.

In order to be able to utilize the energy of the fluid, it has been suggested to provide the pressure reducing valve in such a water distributing network with a turbine which is arranged to capture energy which is released during pressure reduction. US 6,824,347 B2 discloses such valve.

At some water distribution networks, it may also be desirable to increase the pressure and or fluid flow in the down stream direction. WO2008/004880 discloses an apparatus and a method for regulation of the energy potential in a fluid column located within a pipeline. An apparatus disclosed in that document comprises at least two impellers which are arranged in a housing and which may be used either for harvesting energy from the fluid flow in a pipeline or for supplying energy to the fluid flow. In practice this apparatus may thus be used either as an electrical generator or as a pump.

Even though the previously known valves may be utilized at and adapted for harvesting of energy while regulating the fluid pressure and/or the fluid flow rate in different types of fluid distribution networks, there still remain disadvantages of the known arrangements. A major disadvantage of the previous known valves is that they are comparatively space demanding. Therefore it has been comparatively complicated to install and integrate such valves/apparatuses in existing networks. Additionally, such previously known valves/apparatuses require additional safety equipment to be installed for limiting the consequences of e.g. a mechanical or electrical failure, which failures may cause that the fluid downstream of the apparatus greatly exceeds any nominal value. Such overpressures occurring in any part of the network may severely damage components of the network and may even cause injuries to persons in the proximity of the network components. The demand for such safety equipment including bypass conduits, pressure relieve means and the like has hitherto made integration of the apparatuses complicated and expensive.

### SUMMARY OF THE INVENTION

It is therefore an object of the present invention to provide an enhanced valve for regulating the fluid pressure and/or the fluid flow rate in a fluid distribution network.

It is another object to provide such a valve which may be readily installed in existing water distribution networks as a single unit.

Still an object is to provide such an apparatus which may be installed in existing water distribution networks without requiring any further adaptations or modifications of the network.

Yet another object is to provide such a valve which is reliable in use and which requires a comparatively low amount of maintenance.

It is a still further object to provide such a valve which, in addition to regulating the fluid also may be used for an efficient production of electricity.

According to the present invention these objects are achieved by a valve as defined in claim 1. The valve is intended for regulating the fluid pressure and/or the fluid flow in a fluid distribution network. The valve comprises; a fluid inlet port and a fluid outlet port; a first stator defining an interior space; and a main pressure control means for regulating the pressure difference between the fluid inlet port and the fluid outlet port, which main pressure control means comprises a turbine which is rotatably arranged in the interior space and means for controlling the rotation of the turbine. In accordance with the invention, the valve further comprises an auxiliary pressure control means, which is arranged to limit the fluid pressure at the fluid outlet to a predetermined maximum value.

Hence, the valve is arranged for regulating the pressure difference between the inlet port and outlet port by influencing the main pressure control means, i.e. by controlling the rotation of the turbine. Hereby, the valve may efficiently be used for transforming the energy contained in the flowing fluid into useful power, such as mechanical power provided at an output shaft connected to the turbine or electrical power generated by a generator or alternator which is connected to or forms part of the turbine. The auxiliary pressure control means is further arranged to limit the fluid pressure at the valve's outlet to a predetermined maximum value. Hereby, it is ascertained that the pressure downstream of the valve does not exceed the predetermined maximum value even in cases where e.g. the control means for regulating the rotation of the turbine would fail, both in a free spinning mode and in a blocked or stuck mode. Since the auxiliary pressure control means constitute a reliable additional safety means, which may be fully integrated in the valve, the valve may be readily installed and used in many sorts and types of e.g. water distribution grids, without the necessity to provide additional safety means such as by-pass channels, additional pressure limiting valves, pressure relief valves or shut off valves. The inventive valve thus provides a reliable integrated valve arrangement, which may be readily installed as a fully operational single unit in existing fluid networks.

The auxiliary pressure control means may be arranged to allow the predetermined maximum value to be adjusted. Hereby, the same type of valve and even the same valve may be installed and used at many different applications where the requirements in regard of maximum allowed fluid pressure varies.

The auxiliary pressure control means may comprise a pressure limiting valve which is arranged downstream of or in parallel with the turbine.

Preferably, the pressure limiting valve is arranged downstream of the turbine.

In such case the pressure limiting valve may comprise a valve closure member which is arranged to cooperate with a valve seat. Hereby a comparatively simple and yet very reliable auxiliary pressure control means is achieved.

The valve closure member may be preloaded in a direction away from the valve seat, with a force which corresponds to the predetermined maximum value. This allows for a simple an reliable means for achieving the desired possibility to predetermine the maximum pressure.

The pressure limiting valve may comprise a spring which acts on the valve closure member with a determined pretension, for preloading the valve closure member away from the valve seat. The spring may be a compression spring. The pressure limiting valve may further comprise a nut arrangement for adjustment of the pretension of the spring. These features all allow for a simple and reliable way of achieving the desirable control of the maximum fluid pressure downstream of the main pressure control means, involving a comparatively low number of moving parts.

Alternatively the auxiliary pressure control means may comprise a flexible wall portion of the turbine, which wall portion then extends generally in a plane which is perpendicular to the axis or rotation of the turbine, an outer surface of which wall portion is exposed to the fluid pressure downstream of the turbine and which wall portion carries a valve closure member of the pressure limiting valve, which valve closure member is arranged to cooperate with a valve seat arranged at the first stator. Hereby, the number of moving parts required for achieving the desirable control of the maximum fluid pressure may be reduced even further.

The turbine may then define an inner volume which contains a fluid which is arranged to be pressurized for exerting a predetermined pressure to an inner surface of said wall portion to thereby preload the valve closure member in a direction away from the valve seat. By this means the predetermined maximum pressure value may be set by hydraulic means.

The first stator may comprise an annular inlet channel encircling the interior space and being connected to the fluid inlet port; and at least two inlet openings connecting said inlet channel to the interior space. By arranging the inlet openings mutually radially opposite to each other or, in cases where there is an odd number of inlet ports, evenly distributed around the interior space, the fluid pressure will act equally on a corresponding number of equally distributed segments of the turbine. Thereby the turbine will be radially balanced, which reduces the radial load on the turbine itself and on bearings and other parts which supports the turbine in the radial direction. Additionally such balancing of the turbine reduces leakage between the high pressure side and low pressure side of the turbine, thereby increasing the accuracy in regulating the pressure difference by means of the main pressure control means and the also increasing the power efficiency when the turbine is used for transforming energy of the fluid into mechanical or electrical power.

The first stator may further comprise an outlet fluid channel being connected to the fluid outlet port and a number of outlet openings corresponding to the number of inlet openings, connecting the interior space to said outlet fluid channel. Hereby it is possible to further enhance the balancing of the turbine. In order to improve the balancing of the rotor yet further, the accumulated area of all outlet openings is preferably essentially equal to the accumulated area of all inlet openings.

The turbine may comprise a number of radially arranged vanes for efficiently influencing the fluid pressure and/or flow rate, when controlling, such as breaking, the rotation of the turbine. The vanes may be movable in relation to a turbine core portion.

The vanes may e.g. be arranged radially displaceable or slidable in relation to the core. According to a preferred embodiment, the vanes are hinged to the core portion, such that each vane is pivotal about a respective axis which axes are parallel to the rotational axis of the turbine. By this means, the vanes may comparatively easily be arranged for presenting a variable pressure exposed area or stroke during rotation of the turbine. Hence, the vanes may be arranged to present a maximum exposed area shortly after having passed the fluid inlet opening and a minimum exposed area at or shortly after having passed the outlet opening. Such an arrangement contributes to an efficient energy harvesting.

The turbine may define an inner space, which contains a fluid. This fluid could be used either for pressurizing and controlling the flexible wall carrying a valve closure member of the auxiliary pressure control means as set out above or for cooling and/or lubricating movable parts of the turbine. In such cases the valve preferably comprises means for circulating said fluid within the valve. Hereby the lubrication and/or cooling effect of the fluid may be enhanced.

The valve may preferably comprise an electrical generator for transforming rotational energy of the turbine to electrical energy. By this means the energy of the fluid to be controlled may be utilized for any useful purpose. This naturally entails for great economic and environmental benefits.

The valve may in such cases, comprise a second stator which is arranged radially inside the turbine, and the turbine may form a rotor of the generator and the second stator a stator of the generator. By this means an efficient and space saving valve, which is capable of generating electrical power may be achieved.

The valve may further comprise electrical components for connection to an electric grid, and these components may be arranged to be cooled by a fluid circulated by the rotation of the turbine.

Especially in cases where the valve comprises an electrical generator, it may also comprise batteries for temporary storage of electricity generated by the generator. This contributes to allow production of useful electrical power at all times and facilitates the supply of such electrical power to the grid at any desirable time.

Further objects and advantages of the invention will be apparent when studying the following detailed description of exemplifying embodiments and the appended claims.

### BRIEF DESCRIPTION OF THE DRAWINGS

The invention is now described, by way of example, with reference to the accompanying drawings, in which:
Fig. 1 is a perspective view of a valve according to an embodiment of the invention.
Fig. 2 is a perspective view of the valve shown in fig. 1 with an upper part removed.
Fig. 3 is a perspective view of the valve shown in fig. 2 with the turbine removed.
Fig. 4 is a perspective view of the valve shown in fig. 3 with an insert removed.
Fig. 5 is a perspective view of the turbine and an insert of the valve shown in fig. 1.
Fig. 6 is a perspective view of the turbine shown in fig 5, with the insert removed.
Fig. 7 is a perspective cross section of a lower part of the valve shown in fig. 1.
Fig. 8 is a perspective cross- section of an insert forming part of the valve shown in fig. 1.
Figs 9 and 10 are cross-sections of the valve shown in fig. 1.
Fig. 11 is a schematic plan view from above showing some parts of the valve shown in fig. 1.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description. If not stated differently in this document, the term fluid flow rate means the volumetric flow per time unit.

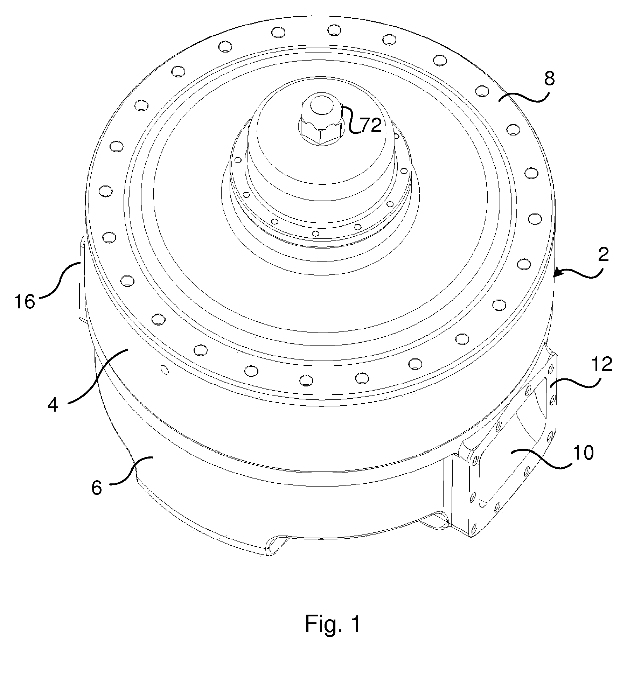

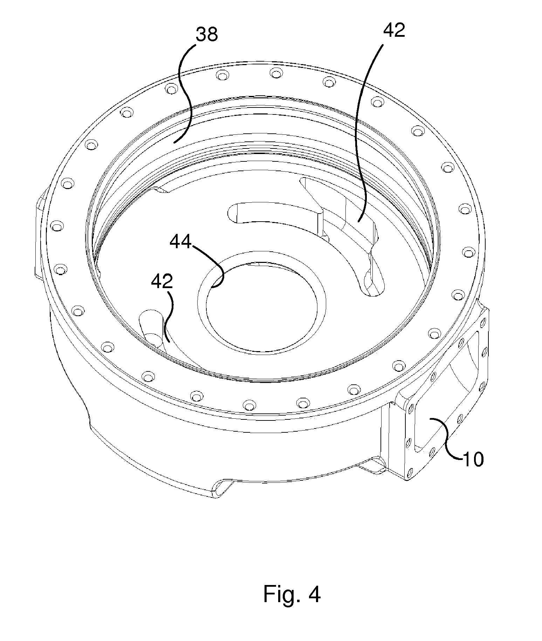

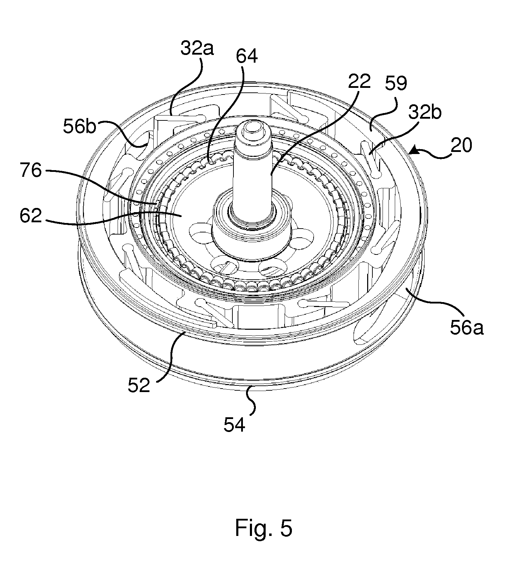

Figs. 1-11 illustrate a valve according to one embodiment of the invention. First with reference to fig. 1, the valve comprises a generally cylindrical housing 2 comprising an upper part 4 and a lower part 6. The upper part 4 is covered by a removable lid 8. The lid 8, upper part 4 and lower part 6 are secured to each other by means of a plurality of bolts (not shown) which extend through the lid 8 and the upper part 4 and which are treadedly engaged in the lower part 6. The lower part 6 comprises a fluid inlet port 10 which is surrounded by an inlet mounting flange 12 for securing an inlet pipe of a water distribution network or the like. The lower part 6 also comprises a fluid outlet port 14 which is surrounded by an outlet mounting flange 16 for securing an outlet pipe of the water distribution network or the like. The upper 4 and lower 6 parts are in the exemplifying embodiment made of cast iron. It is however also possible that these parts may be made of other materials such as plastic and/or brass. In the shown example, the lid 8 is made of steel but other materials such as plastic and/or brass are possible also for this part of the valve.

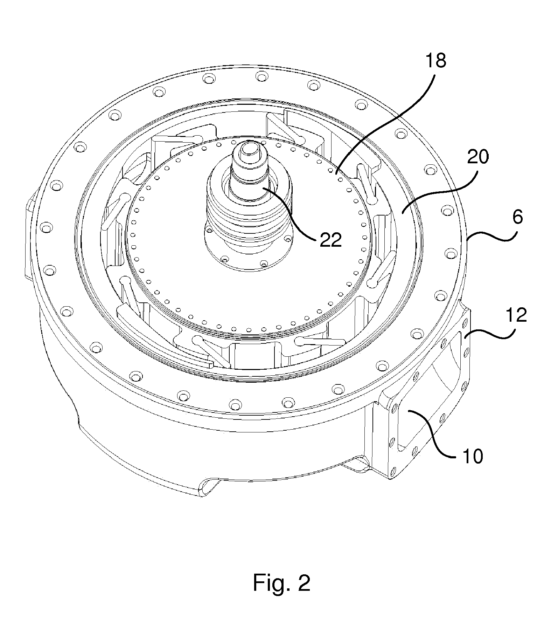

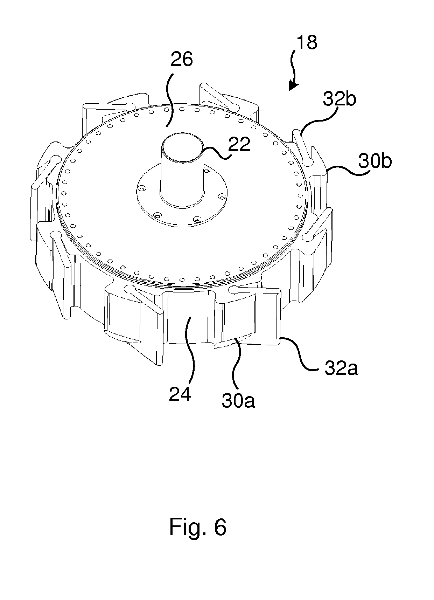

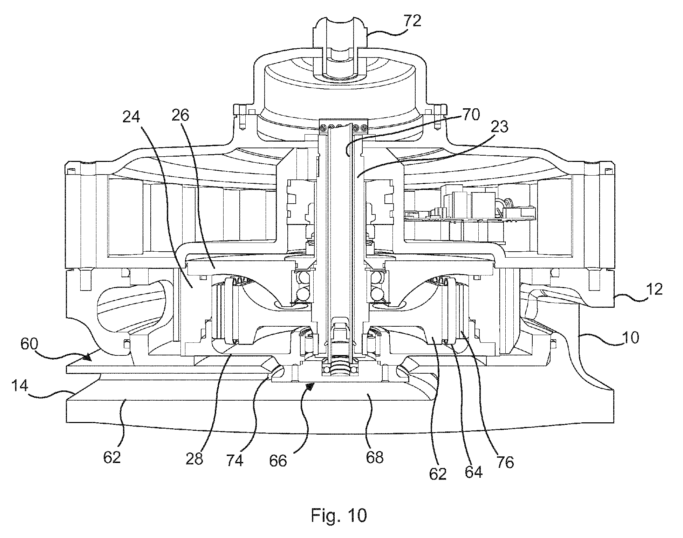

With reference to figs. 2-8 the interior of the valve will be described below. Fig. 2 shows the valve when the upper part 4 has been removed. As seen in fig. 2, the lower part 6 houses a turbine 18 which is circumferentially surrounded by an insert 20 received in the lower part 6. In fig. 6 the turbine 18 is shown separately. The turbine 18 comprises a central hollow shaft 22 which defines the rotational axis of the turbine 18. The turbine 18 further comprises a annular core 24, a turbine lid 26 and a turbine bottom wall 28 (see fig. 10). At the circumferential surface of the annular core 24, a number of fixation brackets 30a, 30b are arranged. At each fixation bracket 30a, 30b, a respective vane 32a, 32b is hingedly attached, such that each vane may be pivoted about a respective axis which is parallel to the rotational axis of the turbine 18. Each vane 32a, 32b may be pivoted between a radially inner position as illustrated by vane 32b and a radially outer position as illustrated by vane 32a. By this means the effective vane area being exposed to the fluid flow may vary for each vane during rotation of the turbine 18.

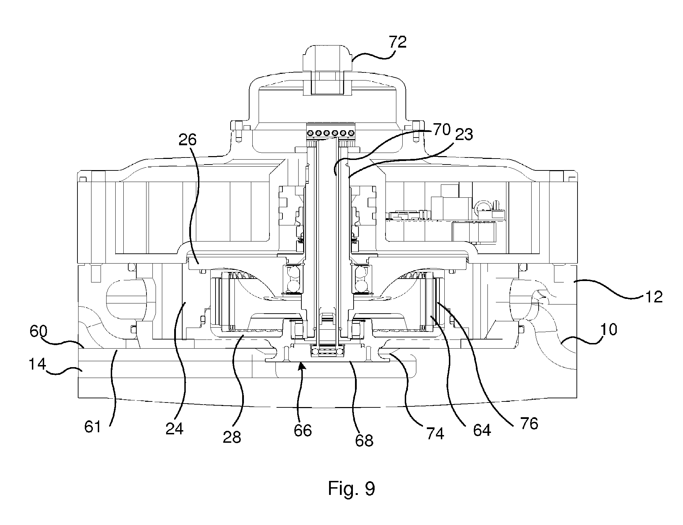

As is best seen in fig 9, the annular core 24, the turbine lid 26 and the turbine bottom wall 28 defines an inner volume of the turbine. This volume will be described more in detail further down.

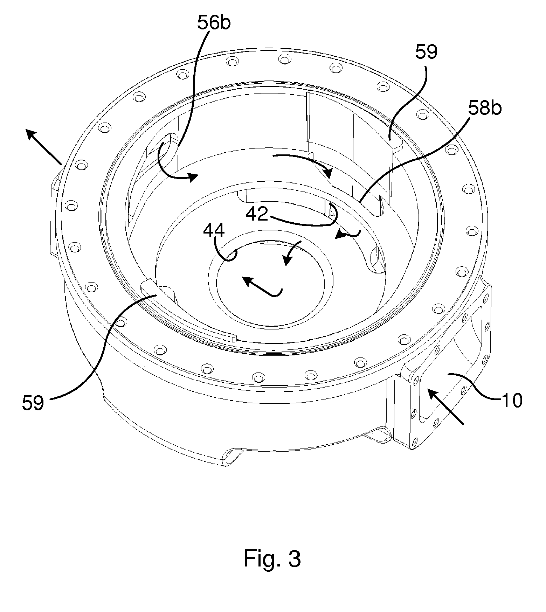

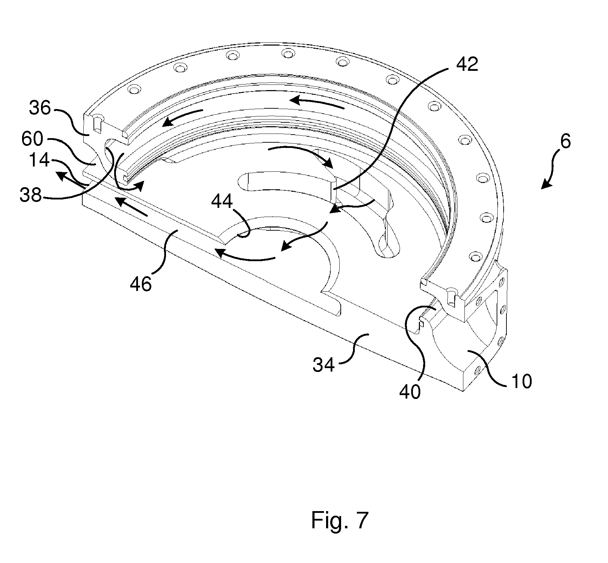

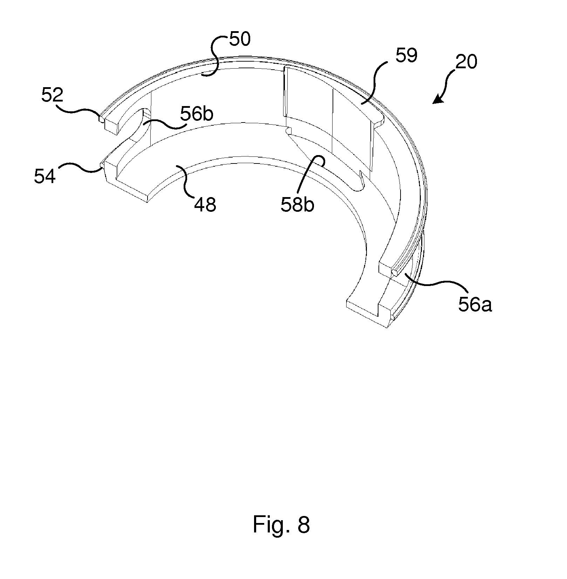

Figs. 3, 4, 7, 8 and 11 illustrate the lower part 6 of the housing and the insert 20. In figs. 7 and 8 only a half section of the lower part 6 and the insert 20 respectively are shown. The lower part 6 comprises a base portion 34 and a circumferential wall 36, which extends upwardly from the base portion 34. The base portion 34 and the circumferential wall 36 form an interior cavity, which receives the insert 20. A radially inwardly open circumferential groove 38 is arranged in the wall 36 and encircles the entire wall 36. The groove 38 communicates with the inlet port 10 through an opening 40 through the wall 36. The base portion exhibits two radially opposed, upwardly open outlet recesses 42. The base portion 34 further exhibits a centrally arranged circular outlet through hole 44, which communicates with the outlet port 14 via a radially arranged outlet channel 46.

The insert 20 comprises an annular bottom wall 48 and a generally cylindrical circumferential insert wall 50. When the insert 20 is positioned in the lower part 6 it contributes to define an interior space of the valve. An upper 52 and a lower 54 radially projecting circumferential sealing flange is arranged at the outer side of the circumferential wall 50. When the insert 20 is positioned in the lower part 6, the upper 53 and lower 54 sealing flanges sealingly contacts the circumferential wall of 36 the lower part 6 above and below, respectively, the groove 38. By this means an circumferential inlet channel or ring manifold is formed between the lower part 6 and the insert. The insert's circumferential wall 50 exhibits two radially opposed inlet openings 56a, 56b and the insert's bottom 48 wall exhibits two radially opposed outlet openings 58a, 58b, one of which is shown in fig. 8.

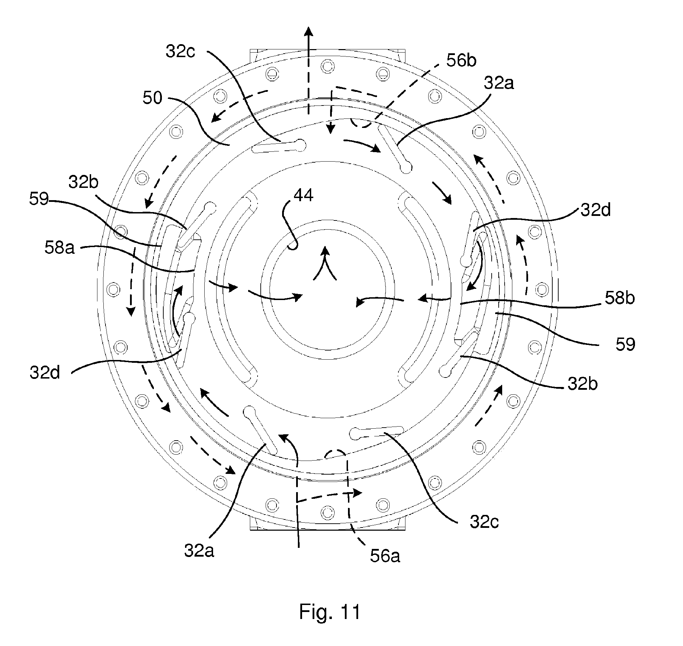

As best seen in fig. 11, wherein the rotor has been removed, the outer surface of the insert's circumferential wall 50 is generally cylindrical. Its inner surface exhibits an irregular shape such that the inner radius varies in the circumferential direction. As seen in the clock wise direction, the inner radius exhibits a respective maximum just after each inlet opening 56a, 56b, as seen in the clockwise direction. Thereafter the inner radius continuously decreases to reach a respective minimum just before the next inlet opening. Additionally, two exchangeable wear members 59 are removably attached in corresponding recesses in the circumferential wall 50. Each wear member 59 is positioned in line with and circumferentially overlapping a respective one of the outlet openings 58a, 58b. Each wear member 59 is formed such that its radial thickness increases in the circumferential clockwise direction of the insert 50 as seen in the drawings. By this means the inner surface of wear members 59 follows the continuously decreasing inner radius of the circumferential walls 50 inner surface. The continuously decreasing inner radius of the circumferential wall 50 and the wear members 59 causes the vanes 32a, 32b to pivot from the radially outer position (see vanes 32a) to the radially inner position (see vanes 32b), when the vanes pass from one inlet opening 56a to the other inlet opening 56b during clockwise rotation of the turbine 18. The interior space is thus divided into two chambers which are essentially sealed from each other by means of the vanes 32a, 32b. A first chamber extends from the inlet opening 56a to the outlet opening 58a and a second chamber extends from the inlet opening 56b to the outlet opening 58b (see fig. 11)

In figs. 3, 7 and 11 the flow direction of the fluid through the valve has been illustrated by curved arrows. In the exemplifying embodiment the interior space has two inlet openings 56a, 56b and two outlet openings 58a, 58b. The fluid enters the valve through the inlet port 10. A portion of the incoming flow directly enters the interior space via the first inlet opening 56a. The remaining flow is directed counter-clockwise in the inlet channel formed by the groove 38 to the second inlet opening 56b. A reminding portion of the flow continues further in the counter clockwise direction to the first inlet opening 56a, such that the entire inlet channel is continuously filled with the flowing fluid. In the interior space both flow portions having entered the interior space act on the vanes 32a, 32b while rotating the turbine 18 in the clockwise direction. Since the flow acts on two radially opposite sides of the turbine 18 the turbine is balanced such that the load on and wear of the turbine bearings is kept at a minimum.

As best seen in fig. 11, the exposed or effective area of the vanes 32a, 32b, 32c and 32d varies during the movement of the vanes between the inlet openings 56a, 56b and the outlet openings 58a, 58b. The vanes may thus be said to present a variable stroke. The vane 32c, which is positioned immediately before the inlet opening 56b is in its fully retracted position, at which the vane 32c does not protrude radially out from the outer surface of the rotor core. At this position the vane 32c exhibits essentially no exposed active area upon which the fluid pressure may act and the variable stroke of the vane 32c may be said to be zero in this position. The vane 32a, which has passed the inlet opening 56b and has been pivoted outwards to its fully extended position, exhibits a maximum active area and stroke. The vane 32d is positioned at the beginning of outlet opening 58b and has been pivoted inwardly to an intermediate active area and stroke. The vane 32b has passed the outlet opening 58b and is approaching the second inlet opening 56a. This vane 32b has again assumed the fully retracted position and exhibits essentially no active area and zero stroke. Hereby, the counteracting forces generated by the fluid and acting on the vanes in a direction opposite to the rotational direction of the rotor may be reduced and minimized. This in turn entails for a reduction of losses and an increased efficiency of the device.

Both flows exit the interior space through a respective outlet opening 58a, 58b and continues down into the respective outlet recess 42. Here the flows turn upwardly and continues between the base portion 34 and the turbine bottom wall 28 to the central outlet through hole 44. Here the two flows are joined and pass down through the hole 44, via the outlet channel 46 to the outlet port 14. The sealing flanges 54 and 56 need not be perfectly tight and it may be allowed that a certain portion of the total flow through the valve passes directly from the outlet channel formed by the groove 38 to an upper portion of the outlet port 14 which forms an internal leakage outlet port 60. The internal leakage outlet port 60 is separated from the outlet port 14 by a horizontal wall portion 61 of the base portion 34. However, both the outlet port 14 and the internal leakage outlet port 60 are surrounded by the same outlet mounting flange 16 such that both outlet flows will enter the same outlet pipe connected to the valve.

As best seen in fig 10, the turbine lid 26 and the turbine bottom wall 28 are journalled in bearings to a stationary shaft 23. The turbine's 18 annular core 24, lid 26 and bottom wall 28 are sealingly mounted together and form a rotor which rotates in relation to a first stator which comprises the lower part 6 and the insert 20. The turbine 18 in turn houses a second stator 62 which constitutes a generator stator- The second stator 62 is generally disc shaped and is stationary attached to the shaft 23. The second stator 62 comprises a number of electrical windings 64. The rotor of the generator is formed by the turbine 18, which comprises a number of permanent magnets 76 arranged on the cylindrical inner surface of the annular core 24. The electronics for controlling the generator is arranged in the upper part 4 and may be readily accessed by removing the lid 8 of the valve. The electronics comprise electrical output mains which may be connected to an electrical grid or the like for supplying electricity to the grid.

The interior of the turbine 18 may contain a cooling and lubricating fluid, such as an oil for cooling the windings 64 and magnets 76 and for lubricating the bearings of the turbine 18. The turbine 18 further comprises interior vanes (not shown) or the like for producing a circulation of the oil inside the turbine 18, to thereby enhance the cooling capacity of the oil. To this end, the flow of the water or other fluid through the first stator of the valve absorbs heat from the oil, by heat transfer through the turbine's 18 annular core 24, lid 26 and bottom wall 28, thereby enhancing the cooling effect of the oil even further.

The turbine 18 and the generator form a main pressure control means of the valve. By controlling the electrical load of the generator, it is possible to regulate the rotation of the turbine 18 such that the flow resistance presented to the fluid flow through the valve is regulated. For any given flow rate of the incoming fluid flow it is thus possible to control the pressure difference over the valve such that the fluid pressure at the outlet port 14 may be maintained at any desirable value. By connecting the electrical output mains of the generator to an electrical grid, it is possible to use the energy which is harvested from the fluid flow to supply electrical power to the grid. In an embodiment which is not shown in the drawings, the valve may further comprise or be electrically connected to batteries to which the electricity generated by the generator is supplied. The electrical power stored in the batteries may in turn be supplied to a grid at any advantageous time or to any other consumer of electrical power at any time.

As best seen in fig 10, the valve further comprises an auxiliary pressure control means. This means comprises a pressure-limiting valve 66. In the exemplifying embodiment shown, a generally disc shaped valve closure member 68 is attached to a pretension rod 70, which is received in and extends through the shaft 23. At an upper end of the pretension rod 70, a nut arrangement 72 is arranged. The nut arrangement comprises a nut and a helical spring (not shown), which urges the pretension rod 70 and the closure member downwards by a pretensional force, which may be determined by compressing the spring by means of the nut. The pressure-limiting valve 66 further comprises a valve seat 74, which is formed at the lower circumferential surface surrounding the outlet through hole 44 in the base portion 34 of the lower part 6. The closure member 68 is thus urged away from the valve seat 74 by a predetermined pretension force, which force may easily be adjusted by turning the nut, which is readily accessible from the outside of the valve. During normal use of the valve the pretension force keeps the closure member 68 at a distance from the valve seat 74 such that an annular slit is formed in the outlet through hole 44, between the closure member 68 and the valve seat 74. The fluid may thus exit the interior space through this slit and be further directed through the outlet channel 46 to the outlet port 14 at a comparatively low pressure drop. If however, the turbine 18 or the electrical controlling circuits, for any reason, would fail such that the turbine 18 would spin freely, the fluid pressure in the outlet channel 46 may rise such that it exceeds the maximum allowed outlet pressure. The fluid pressure would then act on the lower surface of the closure member 68 and, when the pressure exceeds the predetermined pretension force, the closure member 68 will be forced upwards towards the valve seat 74, such that the area of the annular slit is reduced. Thereby the flow through the pressure limiting valve will be reduced such that the fluid pressure downstream of the pressure limiting valve 66, i.e. in the outlet channel 46 is reduced correspondingly.

The auxiliary pressure control means thus provide a very simple and efficient way of ensuring that the fluid pressure downstream of the valve never exceeds a predetermined value, irrespectively of if the main pressure control means functions appropriately or if any of its components fails. By this means the valve may readily be installed in e.g. water distribution networks without the requirement of installing or otherwise arranging any additional fail safe valves, by pass conduits or other safety arrangements.

According to an embodiment which is not shown in the figures, the auxiliary pressure control means, may comprise a closure member which is attached to the bottom wall of the turbine. This bottom wall is then made somewhat flexible. The closure member is then also arranged to cooperate with a valve seat formed around the exit through hole of the base portion. However, instead of being pretensioned by means of a nut arrangement, the pretensional force of the closure member may be achieved by pressurising the cooling and lubricating fluid, which is received within the interior of the turbine. Pressurizing means, such as a pump or a piston-cylinder arrangement may then be provided for maintaining the fluid within the interior of the turbine at any desired predetermined pretension pressure. When the pressure of the fluid in the outlet channel exceeds the predetermined maximum pressure, the flexible bottom wall of the turbine will allow the closure member to move towards the valve seat, against the force created by the pressure of the cooling and lubricating fluid. Thereby the flow through the exit through hole will be restricted such that the fluid flow pressure in the outlet channel is reduced to the predetermined value.

Additionally the valve may be arranged to prevent a build-up of an excessive overpressure up-stream of the valve, in case the turbine for any reason would be stuck or otherwise be hindered to rotate. By arranging the upper 52 and lower 54 sealing flange to admit leakage of fluid into the internal leakage outlet port 60 at a predetermined fluid pressure upstream of said sealing flanges 52, 54, the turbine and the auxiliary pressure control means are by-passed when the pressure upstream of the valve exceeds a value corresponding to said predetermined value. Hereby, the build-up of excessive and potentially harming or dangerous fluid pressures up-stream of the valve is efficiently prevented in a simple and reliable manner.

According to an embodiment which is not shown in the drawings such a by-pass connection is arranged such that only the turbine is by-passed but the auxiliary pressure control means is kept in the fluid pass-way also when the pressure upstream of the valve increases due to that the rotation of the turbine has been impeded or hindered. Such a by-pass of only the turbine may be effectively accomplished by arranging radially extending grooves (not shown) in the lower surface of the insert's 20 bottom wall 48. In case the turbine gets stuck or is otherwise hindered from rotation such that the fluid pressure upstream of the valve raises, the upper 52 and lower 54 sealing flanges then allow fluid to leak outside of the insert 20 to its lower portion, where the fluid is led through the radially arranged grooves below the insert 20 to the outlet through hole 44. By this means the fluid is by-passed the turbine but led to the auxiliary pressure control means, which will regulate the fluid pressure at the outlet port 14 as described above. At this embodiment the internal leakage outlet port 60 is preferably omitted. At this embodiment the auxiliary pressure control means incorporating the pressure limiting valve 66 may be said to be arranged in parallel with the turbine 18.

Above, different embodiments of the valve according to the invention have been described. The invention is however not limited to these embodiments and in can be varied freely within the scope of the appended claims. For instance the main pressure controlling means may comprise any type of turbine, which is able to allow control of the pressure difference over the valve. Especially the valve may comprise any type of positive displacement turbine. Instead of comprising a number of vanes which are hingedely connected to a turbine core, the turbine may comprise vanes that are fixed to a core or vanes that are radially displaceable relative to a turbine core. Instead of comprising an electrical generator, the valve may comprise any other means for controlling the rotation of the turbine. For instance the valve may comprise any mechanical breaking means that may be arranged to control the rotational speed of the turbine. Such breaking means may, in its simplest form transform the energy harvested from the fluid flow into heat, which is dissipated. The valve may also comprise an mechanical output shaft which is driven by the turbine and which is mechanically connected to any mechanical apparatus or machine utilizing the energy harvested from the fluid flow. In cases when the main pressure control means comprises an electrical generator, this generator may be of the permanent magnet type or of the electrically magnetized type. The valve mav or may not comprise one or several internal batteries which e.g. may be used to store electrical power harvested from the fluid flow at times when the cost for electricity is low and to supply electricity to a grid at times when the cost for electricity is higher.

In the examples described above the valve is installed in a water distribution network. The inventive valve may however find other useful and beneficial applications. The valve may be installed in any type of line or grid where a fluid is transported. The fluid transported may be any type of liquid gas or even particulate solid. Examples of such lines or grids comprise pipelines for transporting water or petroleum gas or liquid, process plants, chemical or cooling lines and irrigation systems

## Claims

1. A valve for regulating the fluid pressure and/or the fluid flow rate in a fluid distribution network, said valve comprising;
- a fluid inlet port (10) and a fluid outlet port (14);
- a first stator defining an interior space; and
- a main pressure control means for regulating the pressure difference between the fluid inlet port and the fluid outlet port, which main pressure control means comprises a turbine (18) which is rotatably arranged in the interior space and means for controlling the rotation of the turbine, **characterized in that**
the valve further comprises an auxiliary pressure control means which is arranged to limit the fluid pressure at the fluid outlet port to a predetermined maximum value.

2. A valve according to claim 1, wherein the auxiliary pressure control means is arranged to allow the predetermined maximum value to be adjusted.

3. A valve according to claim 1 or 2, wherein the auxiliary pressure control means comprises a pressure limiting valve (66) which is arranged downstream of and/or in parallel with the turbine (18).

4. A valve according to claim 3, wherein the pressure limiting valve (66) is arranged downstream of the turbine (18).

5. A valve according to claim 3, wherein the pressure limiting valve comprises a valve closure member (68) which is arranged to cooperate with a valve seat (74).

6. A valve according to claim 4, wherein the valve closure member (68) is preloaded in a direction away from the valve seat (74), with a force which corresponds to the predetermined maximum value.

7. A valve according to any of claims 1-6, wherein the auxiliary pressure control means comprises a flexible wall portion of the turbine which wall portion extends generally in a plane which is perpendicular to the axis or rotation of the turbine, an outer surface of which wall portion is exposed to the fluid pressure downstream of the turbine and which wall portion carries a valve closure member of the pressure limiting valve, which valve closure member is arranged to cooperate with a valve seat arranged at the first stator.

8. A valve according to claim 7, wherein the turbine defines an inner volume which contains a fluid which is arranged to be pressurized for exerting a predetermined pressure to an inner surface of said wall portion to thereby preload the valve closure member in a direction away from the valve seat.

9. Valve according to any of claims 1-10, wherein the first stator comprises an annular inlet channel encircling the interior space and being connected to the fluid inlet port (10); and at least two inlet openings (56a, 56b) connecting said inlet channel to the interior space.

10. Valve according to claim 9, wherein the first stator comprises an outlet fluid channel being connected to the fluid outlet port (14) and a number of outlet openings (58a, 58b) corresponding to the number of inlet ports, connecting the interior space to said outlet fluid channel.

11. A valve according to any of claim 1-10, wherein the turbine comprises an annular core (24) and a number of vanes (32a, 32b, 32c, 32d) which are hinged to the annular core .

12. A valve according to any of claims 1-11, wherein the turbine (18) defines an inner space which contains a cooling fluid.

13. A valve according to any of claims 1-12, comprising an electrical generator for transforming rotational energy of the turbine to electrical energy.

14. Valve according to claim 13, comprising a second stator (68) which is arranged radially inside the turbine (18), wherein the turbine (18) forms a rotor of the generator and the second stator (68) forms a stator of the generator.

15. A valve according to any of claims 13-14, comprising electrical components for connection to an electric grid, which components are arranged to be cooled by a fluid circulated by the rotation of the turbine (18).
